# EUROPEAN PATENT SPECIFICATION

(11) **EP 2 071 766 B1**
(45) Date of publication and mention of the grant of the patent: **07.08.2013**
(21) Application number: 07291514.3
(22) Date of filing: 13.12.2007
(51) Int. Cl.: H04L 12/28, H04L 12/46

(54) **System and method for improved traffic aggregation in an access network**
System und Verfahren zur verbesserten Verkehrsaggregation in einem Zugangsnetzwerk
Système et procédé pour agrégation améliorée de trafic dans un réseau d'accès

(43) Date of publication of application: 17.06.2009
(73) Proprietor: Alcatel Lucent, 75007 Paris (FR)
(72) Inventor: Cetin, Riza, 2018 Antwerpen (BE)
(74) Representative: ALU Antw Patent Attorneys

(56) References cited:
- EP-A- 1 628 458
- EP-A- 1 798 900
- WO-A-2005/060208
- ALI M ET AL: "Issues and approaches on extending ethernet beyond LANs" IEEE COMMUNICATIONS MAGAZINE, IEEE SERVICE CENTER, PISCATAWAY, US, vol. 42, no. 3, 1 March 2004 (2004-03-01), pages 80-86, XP011108916 ISSN: 0163-6804

## Description

The present invention relates to a method for providing connectivity via an aggregation network with L2 switches, according to the preamble of claim 1, wherein a source, typically an end-user, is communicating with the aggregation network via an access node, and in particular to a method for providing improved connectivity between a plurality of end-users and a plurality of service providers via an aggregation network, the service providers communicating with the aggregation network via edge nodes. The invention further relates to an access system according to the preamble of claim 7. Such a method and system are known from EP 1 628 458.

In an access network a number of end users are connected to an access device, such as a DSLAM (Digital Subscriber Line Access Multiplexer), and the access device is connected to the edge router of the service provider via an aggregation network, typically an Ethernet Metropolitan Area Network (EMAN). In such a network architecture Level 2 (L2) switches of the aggregation network would have to learn the MAC (Medium Access Control) address of every user per service provider virtual local area network (VLAN), wherein the access devices are acting as L2 forwarder. Such a solution is not scalable since the L2 switches will have scalability problems, especially with regard to their forwarding information base (FIB), when too many users are connected to the same aggregation network.

Another solution would be to tunnel user L2 frames into another L2 frame, using the access device MAC address as the source MAC address rather than using the user MAC address. However, this method has the disadvantage of being complex and requiring more processing and overhead.

The object of the invention is to provide a method and system according to the preamble, which are simple requires less processing compared to the methods of the state of the art.

To reach this object the method according to the invention is distinguished by the features of the characterizing portion of claim 1. The access node adapts a frame received from the source and intended for transmission over the aggregation network so that the frame contains:
- the L2 access node hardware address, as the source address of the frame, and
- one or more VLAN tags, being such that at least the L2 source hardware address is derivable from the VLAN tags for this access node.

The access node will typically be a DSLAM, and the L2 hardware addresses are typically MAC addresses.

Using such a method, the L2 switches in the aggregation network only have to learn the L2 access node hardware address, and not the L2 hardware addresses of all the sources connected to the access node.

In a typical aggregation network containing a number of service provider VLANs (S-VLANs), the frame sent by the access node will contain a S-VLAN tag, and the L2 switches will learn the access node MAC address within this S-VLAN.

According to a preferred embodiment the one or more VLAN tags of the adapted frame are given identifiers which uniquely identify for a given access node: the L2 source hardware address, the source port, and if the source is part of a user VLAN, the user VLAN.

In that way, when a frame is received the source can be uniquely identified based on the access node MAC address and the VLAN tags, while the forwarding in the L2 switches of the aggregation network is largely simplified.

According to a further developed embodiment the method comprises the following steps:
- upon receipt of a L2 frame from an end user, the access node adapts the frame so that it contains:
   - one or more VLAN tags which uniquely identify at least the end-user L2 hardware address for the access node, wherein preferably a S-VLAN is determined from the user port, and a C-VLAN is allocated for the user-end hardware address, the user port, and, if tagged with a user VLAN, the user VLAN; and
   - the L2 access node hardware address as the source address of the frame;
- upon receipt of a L2 frame from the aggregation network:
   - the L2 end-user hardware address, and preferably also the user port and, if present, the end-user VLAN is derived from the VLAN tags; and
   - the destination address of the frame is replaced with the L2 end-user hardware address.

The problems of the prior art are further solved by the access system, preferably a DSLAM, of the invention which is characterized by the features of the characterizing portion of claim 7.

Using such an access system allows for an adaption of the frames so that L2 switches in the aggregation network only have to learn the L2 access system hardware address, and not the L2 hardware addresses of all the end-users connected to the access system.

Further advantageous embodiments are disclosed in the dependent claims. It is noted that the features of a dependent claim can be combined with the features of any one or more of the preceding dependent claims in an arbitrary way.

The accompanying drawings are used to illustrate presently preferred non-limiting exemplary embodiments of the present invention. The above and other advantages features and objects of the invention will become more apparent and the invention will be better understood from the following detailed description when read in conjunction with the accompanying drawings in which:
- Figure 1 shows an example of a typical computer network in which the system and method of the invention may be implemented;
- Figure 2 shows an example of a network model using VLAN stacking according to the prior art;
- Figure 3 illustrates schematically an embodiment of the method of the present invention;
- Figures 4 and 5 illustrate a flow chart of the steps performed in an embodiment of an access system of the invention, during upstream and downstream forwarding respectively.

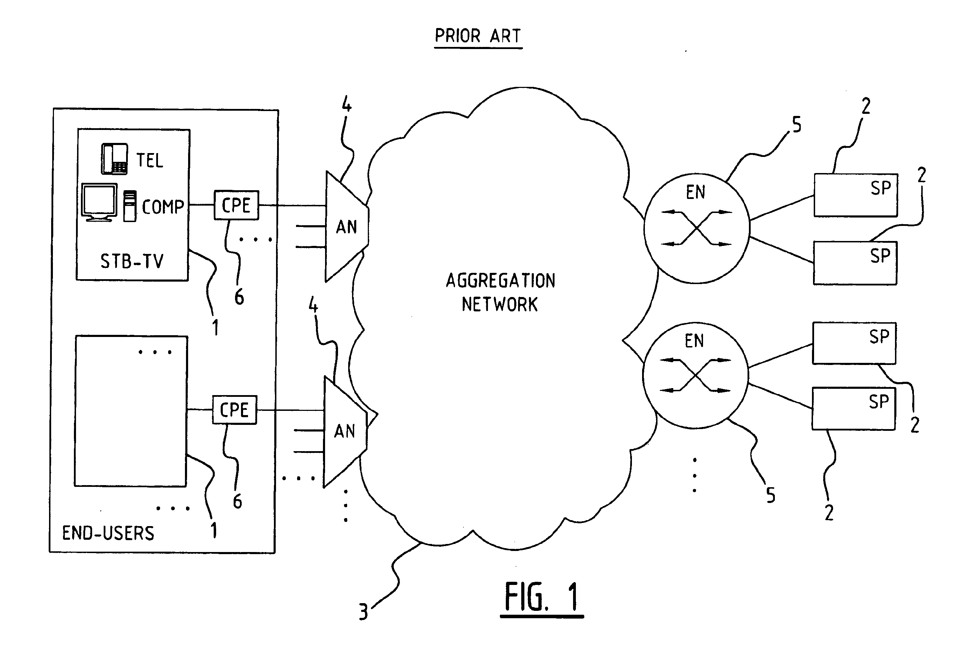

Figure 1 illustrates a typical network model of the state of the art being an arrangement of communication facilities between end users 1 and service providers (SPs) 2. An aggregation network 3, for example an EMAN, carries traffic between an access node (AN) 4 and edge node (EN) 5 and is composed of a number of L2 switches. The forwarding can for example be done based on MAC addresses. The edge node, in the form of an edge router provides connectivity with the service providers, which can for example be internet, network or application service providers. The access node, typically a DSLAM provides connectivity with the end user via a Customer Premises Equipment (CPE) 6.

VLANs are well known to segment a local area network on an organisational basis rather than on a physical basis. The switches know how to process traffic from different VLANs because each Ethernet frame transmitted between switches carries a VLAN identifier (VLAN-ID). The format of VLAN labels is defined in the IEEE 802.1Q standard which is incorporated herein by reference. When users have their own VLAN infrastructure, it is desirable to support both the customer VLAN (C-VLAN) structure and the service provider VLAN structure (S-VLAN, also called provider VLAN, P-VLAN) simultaneously. To this end VLAN tags are stacked (called the Q-in-Q solution) to obtain a larger number of VLAN identifiers. This is specified in IEEE 802.1ad also included herein by reference.

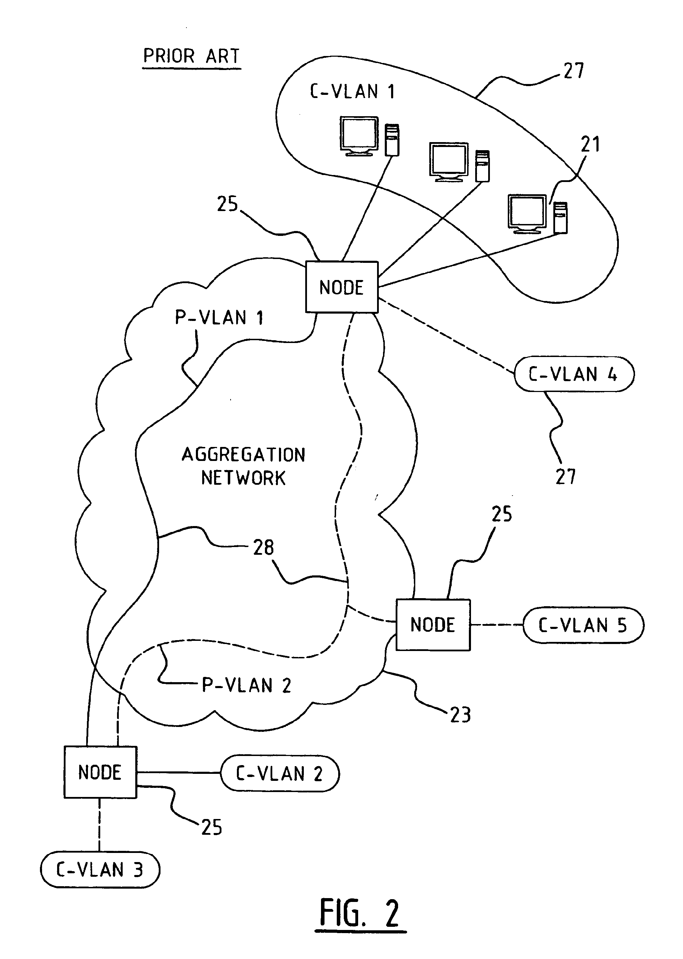

According to one application there is an inner VLAN-ID (C-VLAN-ID) managed by the subscriber and an outer VLAN-ID (S-VLAN-ID) managed by the service provider. Figure 2 illustrates a possible VLAN architecture using Q-in-Q frames (with a stack of a C-VLAN-ID and an S-VLAN-ID). C-VLANs 1-5 indicated with reference numeral 27 are user VLANs. Each user VLAN 27 communicates with the aggregation network 23 through nodes 25. According to the prior art, the switching within the aggregation network is done based on the P-VLANs 28 and the user MAC address.

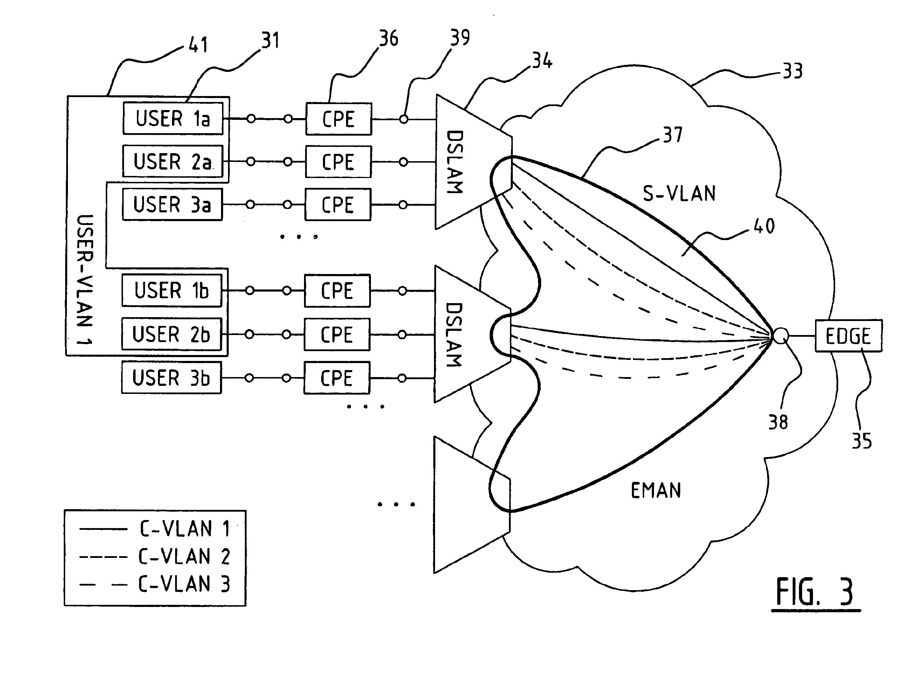

Now an embodiment of the invention will be explained referring to figure 3. The basic idea of this embodiment is to use Ethernet frames in the aggregation network which contain the following information:
- A DSLAM MAC address (instead of a user MAC address as in the prior art) as the source (SRC) MAC address in the upstream direction and as the destination (DST) MAC address in the downstream direction;
- A S-VLAN (outer VLAN 37) tag referring to the IP interface 38 at the edge router 35;
- A C-VLAN (inner VLAN 40) tag referring to a directly attached user MAC address on a user port 39 (or to a user MAC address on a user port and to a user-VLAN).

In the illustrated example the C-VLANs could e.g. be:
DSLAM 1:
   User 1a: C-VLAN-ID = 1;
   User 2a: C-VLAN-ID = 2;
   User 3a: C-VLAN-ID = 3;
DSLAM 2:
   User 1b: C-VLAN-ID = 1;
   User 2b: C-VLAN-ID = 2;
   User 3b: C-VLAN-ID = 3.

When an adapted frame has a C-VLAN-ID = 1, the distinction between user 1a and user 1b can be made based on the MAC address of the DSLAM. In other words the same S-VLAN 37 and C-VLAN 40, 40' can be shared by several DSLAMs connected to the same edge router, the unique identification of the end-user being possible based on the MAC address of the DSLAM.

According to a preferred solution every DSLAM 34 connecting an end-user 31 with the IP edge 35 will be implemented to provide the Ethernet frames entering the aggregation network 33 with the above mentioned information.

In that way the L2 switches in the EMAN network 33 only have to learn the DSLAM MAC address within the S-VLAN 37.

Note that for a DSLAM can have a centralised or distributed architecture. In case of a centralised architecture the DSLAM has only one DSLAM MAC address. However, for the distributed architecture, each line termination (LT) card will have a unique DSLAM MAC address. The skilled person will understand that the invention is applicable for both architectures.

At the edge router, the S-VLAN, the C-VLAN and the DSLAM MAC address are stored in ARP (Address Resolution Protocol) table entry. In the downstream direction from the IP edge to the DSLAMs, a DSLAM will only accept packets when the destination MAC address corresponds with its DSLAM MAC address.

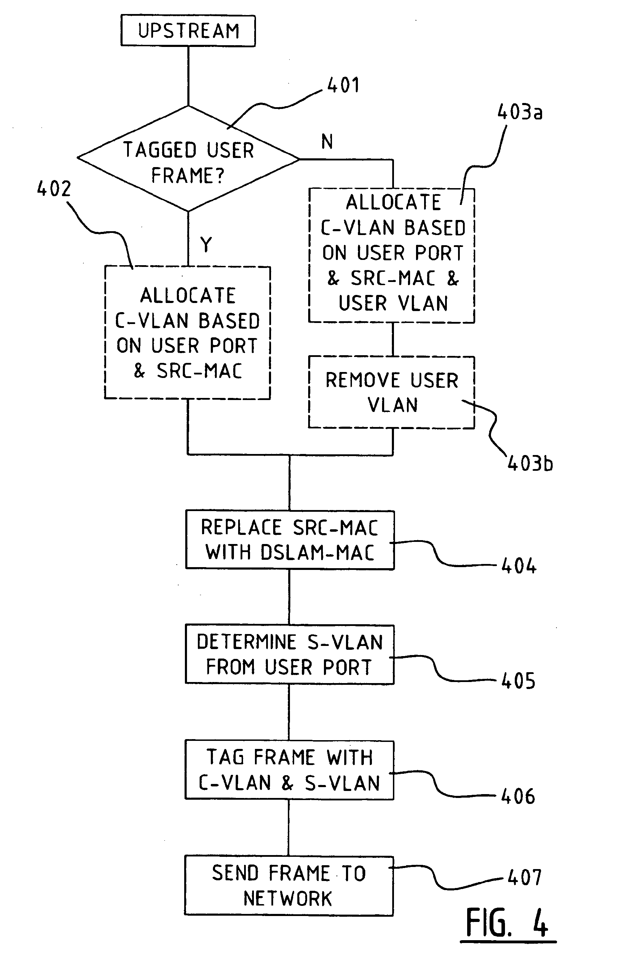

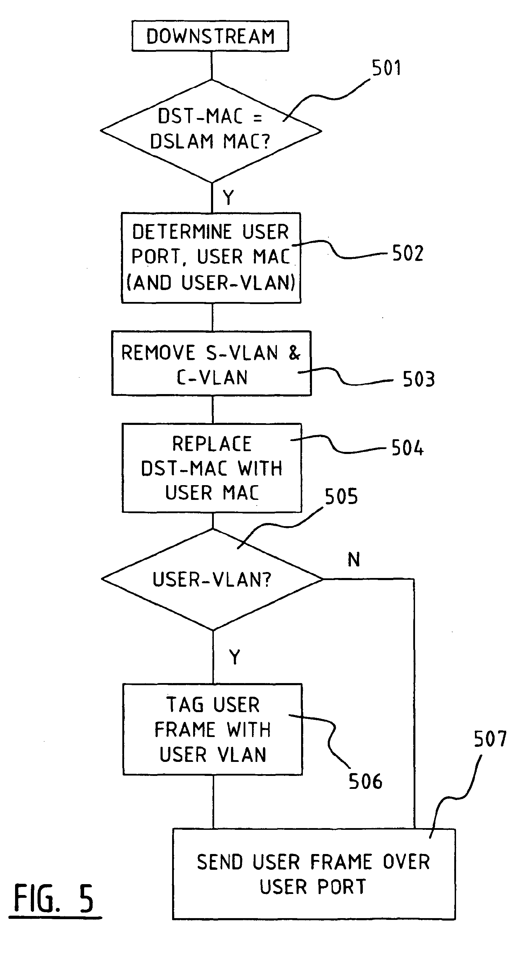

Now the different steps of an embodiment of the method according to the invention will be described in detail for upstream and downstream forwarding in a DSLAM, referring to figures 4 and 5.
(1) Upstream forwarding: determine whether the user frame received by a DSLAM from a user port is tagged (step 401)
   (a) untagged user L2 frame:
      - allocate a C-VLAN for the user port and SRC-MAC combination, unless already allocated (step 402);
      - replace the SRC-MAC address with the DSLAM MAC address (step 404);
      - determine S-VLAN from the user port (step 405);
      - tag user L2 frame with C-VLAN and S-VLAN (step 406);
      - send user L2 frame to network (step 407).
   (b) tagged user L2 frame:
      - allocate a C-VLAN for the user port, user VLAN and SRC-MAC combination, unless already allocated (step 403a);
      - remove user VLAN (step 403b);
      - replace the SRC-MAC address with the DSLAM MAC address (step 404);
      - determine S-VLAN from the user port (step 405);
      - tag user L2 frame with C-VLAN and S-VLAN (step 406);
      - send user L2 frame to network (step 407).
(2) Downstream forwarding: DSLAM receives unicast user L2 frame from EMAN network:
   - accept frame when destination MAC address is the DSLAM MAC address (step 501);
   - determine user port, user VLAN (if any) and MAC address from S-VLAN and C-VLAN combination (step 502);
   - remove S-VLAN and C-VLAN from the frame (step 503);
   - replace DST-MAC address by user MAC address (step 504);
   - determine if there is a user VLAN (step 505), and if yes tag user L2 frame with user VLAN (step 506);
   - send user L2 frame over user port (step 507).

While the principles of the invention have been set out above in connection with specific embodiments, it is to be clearly understood that this description is merely made by way of example and not as a limitation of the scope of protection which is determined by the appended claims.

## Claims

1. Method for providing connectivity via an aggregation network with L2 switches, wherein a source, typically an end-user, is communicating with the aggregation network via an access node,
wherein frames each having a source and destination address are being sent over the aggregation network;
said access node having a L2 access node hardware address;
said source having a L2 end user hardware address; comprising the step of
adapting a frame received from the source and intended for transmission over the aggregation network so that the frame contains:
- the L2 access node hardware address as the source address of the frame,
**characterized by** further adapting said frame so that the frame contains:
- one or more VLAN tags, uniquely identifying at least the L2 end user hardware address for this access node.

2. Method according to claim 1, wherein the frame is sent on a source port, **characterized in that** the one or more VLAN tags of the adapted frame are given identifiers which uniquely identify for a given access node: the L2 source hardware address, the source port, and if the source is part of a user VLAN, the user VLAN.

3. Method according to claim 1 for providing connectivity between a plurality of end users connected to an access node and a plurality of service providers connected to an edge node via an aggregation network, **characterized in that**
- upon receipt of a L2 frame from an end user, the access node adapts the frame so that it contains:
- one or more VLAN tags which uniquely identify at least the end-user L2 hardware address for the access node; and
- the L2 access node hardware address as the source address of the frame;
- upon receipt of a L2 frame from the aggregation network:
- the L2 end-user hardware address is derived from the VLAN tags; and
- the destination address of the frame is replaced with the L2 end-user hardware address.

4. Method according to claim 1, **characterized in that** each L2 hardware address is a MAC address.

5. Method according to claim 3, wherein an L2 frame is sent from an end-user to the access node on a user port, **characterized in that** the access node adapts the frame so that it contains:
- a C-VLAN allocated for the user-end hardware address and the user port;
- a S-VLAN determined from the user port.

6. Method according to claim 3, wherein an L2 frame with a user VLAN tag is sent from an end-user to the access system on a user port, **characterized in that** the access node adapts the frame so that it contains:
- a C-VLAN allocated for the user-end hardware address, the user port and the user VLAN;
- a S-VLAN determined from the user port.

7. Access system for providing connectivity between a plurality of end users and an aggregation network; wherein frames each having a source (SRC) and destination (DST) address are being sent over the aggregation network;
said access system having a L2 access system hardware address;
wherein the access system is arranged for
- upon receipt of a L2 frame from an end user, adapting the frame so that it contains:
- the L2 access system hardware address as the source address of the frame;
- transmitting the adapted frame over the aggregation network, **characterized in that** the access system is further arranged for
- upon receipt of a L2 frame from an end user, adapting the frame so that it further contains:
- one or more VLAN tags which uniquely identify at least the end-user L2 hardware address for said access node.

8. Access system according to claim 7, **characterized in that** said system is further arranged for
- upon receipt of a L2 frame from the aggregation network:
- deriving the L2 end-user hardware address from the VLAN tags; and
- replacing the destination address of the frame with the derived L2 end-user hardware address.

9. Access system according to claim 7, **characterized in that** said system is arranged for
- upon receipt of a L2 frame from an end user on a user port, adapting the frame so that it contains:
- one or more VLAN tags which uniquely identify for said access node: the end-user L2 hardware address, the user port, and if the source is part of a user VLAN, the user VLAN; and
- the L2 access system hardware address as the source address of the frame.

10. Access system according to claim 7, **characterized in that** said system is a DSLAM.

## Patentansprüche

1. Verfahren zur Bereitstellung von Konnektivität über ein Aggregationsnetzwerk mit L2-Schaltern, wobei eine Quelle, typischerweise ein Endbenutzer, über einen Zugangsknoten mit dem Aggregationsnetzwerk kommuniziert, wobei Rahmen mit jeweils einer Quell- und einer Zieladresse über das Aggregationsnetzwerk gesendet werden;
wobei der besagte Zugangsknoten eine L2-Zugangsknoten-Hardware-Adresse hat; wobei die besagte Quelle eine L2-Endbenutzer-Hardware-Adresse hat;
die folgenden Schritte umfassend:
Anpassen eines von der Quelle empfangenen und für die Übertragung über das Aggregationsnetzwerk bestimmten Rahmens, wobei der Rahmen enthält:
- die L2-Zugangsknoten-Hardware-Adresse als die Quelladresse des Rahmens,
**gekennzeichnet durch** das weitere Anpassen des besagten Rahmens, so dass der Rahmen enthält:
- ein oder mehrere VLAN-Tags, welche mindestens die L2-Endbenutzer-Hardware-Adresse für diesen Zugangsknoten eindeutig identifizieren.

2. Verfahren nach Anspruch 1, wobei der Rahmen auf einen Quellport gesendet wird, **dadurch gekennzeichnet, dass** das eine oder mehrere VLAN-Tags des angepassten Rahmens gegebene Kennungen sind, welche für einen gegebenen Zugangsknoten eindeutig identifizieren: die L2-Quell-Hadware-Adresse, den Quellport, und, wenn die Quelle Teil eines Benutzer-VLAN ist, das Benutzer-VLAN.

3. Verfahren nach Anspruch 1 zur Bereitstellung von Konnektivität zwischen einer Vielzahl von an einen Zugangsknoten angeschlossenen Endbenutzern und einer Vielzahl von Dienstanbietern, die über ein Aggregationsnetzwerk an einen Randknoten angeschlossen sind,
**dadurch gekennzeichnet, dass**
- bei Empfang eines L2-Rahmens von einem Endbenutzer, der Zugangsknoten den Rahmen derart anpasst, dass er enthält:
- ein oder mehrere VLAN-Tags, welche mindestens die Endbenutzer-L2-Hardware-Adresse für den Zugangsknoten eindeutig identifizieren; und
- die L2-Zugangsknoten-Hardware-Adresse als die Quelladresse des Rahmens;
- bei Empfang eines L2-Rahmens von dem Aggregationsnetzwerk:
- die L2-Endbenutzer-Hardware-Adresse von den VLAN-Tags abgeleitet wird; und
- die Zieladresse des Rahmens durch die L2-Endbenutzer-Hardware-Adresse ersetzt wird.

4. Verfahren nach Anspruch 1, **dadurch gekennzeichnet, dass** jede L2-Hardware-Adresse eine MAC-Adresse ist.

5. Verfahren nach Anspruch 3, wobei ein L2-Rahmen von einem Endbenutzer auf einem Benutzerport an den Zugangsknoten gesendet wird, **dadurch gekennzeichnet, dass** der Zugangsknoten den Rahmen derart anpasst, dass er enthält:
- ein der benutzerseitigen Hardware-Adresse zugeordnetes C-VLAN und den Benutzerport;
- ein von dem Benutzerport bestimmtes S-VLAN.

6. Verfahren nach Anspruch 3, wobei ein L2-Rahmen mit einem Benutzer-VLAN-Tag von einem Endbenutzer auf einem Benutzer-Port an das Zugangssystem gesendet wird, **dadurch gekennzeichnet, dass** der Zugangsknoten den Rahmen derart anpasst, dass er enthält:
- Ein der benutzerseitigen Hardware-Adresse zugeordnetes C-VLAN;
- ein von dem Benutzerport bestimmtes S-VLAN.

7. Zugangssystem zur Bereitstellung von Konnektivität zwischen einer Vielzahl von an einen Aggregationsnetzwerk angeschlossenen ;
wobei Rahmen mit jeweils einer Quelladresse (SRC) und einer Zieladresse (DST) über das Aggregationsnetzwerk gesendet werden;
wobei das Zugangssystem eine L2-Zugangssystem-Hardware-Adresse hat;
wobei das Zugangssystem dazu ausgelegt ist:
- bei Empfang eines L2-Rahmens von einem Endbenutzer den Rahmen derart anzupassen, dass er enthält:
- die L2-Zugangsknoten-Hardware-Adresse als die Quelladresse des Rahmens;
- den angepassten Rahmen über das Aggregationsnetzwerk zu übertragen, **dadurch gekennzeichnet, dass** das Zugangssystem weiterhin dazu ausgelegt ist:
- bei Empfang eines L2-Rahmens von einem Endbenutzer den Rahmen derart anzupassen, dass er weiterhin enthält:
- ein oder mehrere VLAN-Tags, welche mindestens die Endbenutzer-L2-Hardware-Adresse für den besagten Zugangsknoten eindeutig identifizieren.

8. Zugangssystem nach Anspruch 7, **dadurch gekennzeichnet, dass** das besagte System weiterhin dazu ausgelegt ist:
- bei Empfang eines L2-Rahmens von dem Aggregationsnetzwerk:
- die L2-Endbenutzer-Hardware-Adresse aus den VLAN-Tags abzuleiten; und
- die Zieladresse des Rahmens durch die abgeleitete L2-Endbenutzer-Hardware-Adresse zu ersetzen.

9. Zugangssystem nach Anspruch 7, **dadurch gekennzeichnet, dass** das System dazu ausgelegt ist,
- bei Empfang eines L2-Rahmens von einem Endbenutzer auf einem Benutzerport den Rahmen derart anzupassen, dass er enthält:
- Ein oder mehrere VLAN-Tags, welche für den Zugangsknoten eindeutig identifizieren: die Endbenutzer-L2-Hardware-Adresse, den Benutzerport, und, wenn die Quelle Teil eines Benutzer-VLAN ist, das Benutzer-VLAN; und
- due K2-Zugangssystem-Hardware-Adresse als die Quelladresse des Rahmens.

10. Zugangssystem nach Anspruch 7, **dadurch gekennzeichnet, dass** das System ein DSLAM ist.

## Revendications

1. Procédé de fourniture d'une connectivité par l'intermédiaire d'un réseau d'agrégation avec des commutateurs L2, dans lequel une source, généralement un utilisateur final, communique avec le réseau d'agrégation par l'intermédiaire d'un noeud d'accès,
dans lequel des trames présentant chacune une adresse source et une adresse de destination sont envoyées sur le réseau d'agrégation ; ledit noeud d'accès présentant une adresse physique de noeud d'accès L2 ;
ladite source présentant une adresse physique de l'utilisateur final L2 ; comprenant l'étape suivante :
adapter une trame provenant de la source et destinée à être transmise sur le réseau d'agrégation de sorte que la trame contienne :
- l'adresse physique de noeud d'accès L2 comme adresse source de la trame, **caractérisé en ce qu'**il adapte en outre ladite trame de sorte que la trame contienne :
- une ou plusieurs étiquettes de VLAN, identifiant uniquement au moins l'adresse physique de l'utilisateur final L2 pour ce noeud d'accès.

2. Procédé selon la revendication 1, dans lequel la trame est envoyée sur un port source, **caractérisé en ce que** l'on donne à la ou les étiquettes de VLAN de la trame adaptée des identifiants qui identifient uniquement pour un noeud d'accès donné :
l'adresse physique source L2, le port source, et si la source fait partie d'un VLAN utilisateur, le VLAN utilisateur.

3. Procédé selon la revendication 1 pour réaliser la connectivité entre une pluralité d'utilisateurs finaux connectés à un noeud d'accès et une pluralité de fournisseurs de services connectés à un noeud de bordure par l'intermédiaire d'un réseau d'agrégation, **caractérisé en ce que**
- lors de la réception d'une trame L2 à partir d'un utilisateur final, le noeud d'accès adapte la trame de sorte qu'elle contienne :
- une ou plusieurs étiquettes de VLAN qui identifient uniquement au moins l'adresse physique L2 de l'utilisateur final pour le noeud d'accès ; et
- l'adresse physique de noeud d'accès L2 comme adresse source de la trame ;
- lors de la réception d'une trame L2 à partir du réseau d'agrégation :
- l'adresse physique de l'utilisateur final L2 est dérivée des étiquettes de VLAN ; et
- l'adresse de destination de la trame est remplacée par l'adresse physique de l'utilisateur final L2.

4. Procédé selon la revendication 1, **caractérisé en ce que** chaque adresse physique L2 est une adresse MAC.

5. Procédé selon la revendication 3, dans lequel une trame L2 est envoyée à partir d'un utilisateur final au noeud d'accès sur un port utilisateur, **caractérisé en ce que** le noeud d'accès adapte la trame de sorte qu'elle contienne :
- un C-VLAN attribué pour l'adresse physique côté utilisateur et le port utilisateur ;
- un S-VLAN déterminé à partir du port utilisateur.

6. Procédé selon la revendication 3, dans lequel une trame L2 avec une étiquette de VLAN utilisateur est envoyée à partir d'un utilisateur final au système d'accès sur un port utilisateur, **caractérisé en ce que** le noeud d'accès adapte la trame de sorte qu'elle contienne :
- un C-VLAN attribué pour l'adresse physique côté utilisateur, le port utilisateur et le VLAN utilisateur ;
- un S-VLAN déterminé à partir du port utilisateur.

7. Système d'accès pour réaliser la connectivité entre une pluralité d'utilisateurs finaux et un réseau d'agrégation ; dans lequel des trames présentant chacune une adresse source (SRC) et de destination (DST) sont envoyées sur le réseau d'agrégation ; ledit système d'accès présentant une adresse physique de système d'accès L2 ;
dans lequel le système d'accès est conçu pour
- lors de la réception d'une trame L2 à partir d'un utilisateur final, adapter la trame de sorte qu'elle contienne :
- l'adresse physique de système d'accès L2 comme adresse source de la trame ;
- transmettre la trame adaptée sur le réseau d'agrégation, **caractérisé en ce que** le système d'accès est en outre conçu pour
- lors de la réception d'une trame L2 à partir d'un utilisateur final, adapter la trame de sorte qu'elle contienne en outre :
- une ou plusieurs étiquettes de VLAN qui identifient uniquement au moins l'adresse physique L2 de l'utilisateur final pour ledit noeud d'accès.

8. Système d'accès selon la revendication 7, **caractérisé en ce que** ledit système est en outre conçu pour
- lors de la réception d'une trame L2 à partir du réseau d'agrégation :
- dériver l'adresse physique de l'utilisateur final L2 à partir des étiquettes de VLAN ; et
- remplacer l'adresse de destination de la trame par l'adresse physique de l'utilisateur final L2 dérivée.

9. Système d'accès selon la revendication 7, **caractérisé en ce que** ledit système est conçu pour
- lors de la réception d'une trame L2 à partir d'un utilisateur final sur un port utilisateur, adapter la trame de sorte qu'elle contienne :
- une ou plusieurs étiquettes de VLAN qui identifient uniquement pour ledit noeud d'accès : l'adresse physique L2 de l'utilisateur final, le port utilisateur, et si la source fait partie d'un VLAN utilisateur, le VLAN utilisateur ; et
- l'adresse physique de système d'accès L2 comme adresse source de la trame.

10. Système d'accès selon la revendication 7, **caractérisé en ce que** ledit système est un DSLAM.
